Europäisches Patentamt

European Patent Office

Office européen des brevets

(11) Publication number: **0 197 425**
**A2**

(12) **EUROPEAN PATENT APPLICATION**

(21) Application number: **86104072.3**

(22) Date of filing: **25.03.86**

(51) Int. Cl.⁴: **G 01 N 33/50**
**G 01 N 21/64**

(30) Priority: **11.04.85 US 722866**

(43) Date of publication of application:
**15.10.86 Bulletin 86/42**

(84) Designated Contracting States:
**BE DE FR IT**

(71) Applicant: **ABBOTT LABORATORIES**
**14th Street and Sheridan Road North St**
**North Chicago Illinois 60064(US)**

(72) Inventor: **Pumphrey, John G.**
**1654 Clydesdale Drive**
**Lewisville Texas 65067(US)**

(72) Inventor: **Frenkel, Dina**
**2213 Woodburn Corner**
**Plano Texas 75075(US)**

(72) Inventor: **Shanks, Robert E.**
**2034 Casa Loma Court**
**Grapevine Texas 76051(US)**

(72) Inventor: **Albergo, Diane D.**
**4220 W. Pioneer Drive**
**Irving Texas 75061(US)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Nephelometric analyzer.**

(57) Methods and apparatus for adapting a fluorescence polarization analyzer for the purpose of conducting nephelometric assays, while the fluorescence polarization function is unimpaired, are disclosed. Preferred embodiments of the invention involve the use of light emitting diode source lamps in place of the fluorescence polarization excitation optics, while a third embodiment of the invention supplements the existing emission optics with a fluorescence light conversion filter.

FIG. 5

# NEPHELOMETRIC ANALYZER

## BACKGROUND OF THE INVENTION

The present invention is generally directed to methods for adapting fluorescence polarization immunoassay apparatus for the purpose of conducting nephelometric assays, and to the improved products resulting from these methods. More specifically, the principles of this invention can be used especially advantageously to adapt the Abbott TDx® Fluorescence Polarization Analyzer to perform nephelometric assays.

The TDx system, available from Abbott Laboratories, Abbott Park, Illinois, is a completely automated system used to measure therapeutic drug, endocrine function and clinical chemistry analyte concentrations in biological fluids such as serum, plasma and whole blood. This system is designed for use by trained clinical laboratory technicians in hospital laboratories, in private laboratories and in physicians' offices.

The TDx system was originally designed to operate utilizing fluorescence polarization techniques. Fluorescence polarization techniques are based on the principle that a fluorescent labeled compound in solution, when excited by plane polarized light, will emit fluorescence having a degree of polarization related to its molecular rotational relaxation time. The molecular rotational relaxation time, and hence the magnitude of the fluorescence polarization response, is directly related to the molecular size of the compound. Accordingly, when plane polarized light is passed through a solution containing a relatively high molecular weight fluorescent compound, the degree of polarization of the emitted light will in general be greater than when plane polarized light is passed through a solution containing a low molecular weight fluorescent compond

The fluorescence polarization principle is utilized in the TDx System by mixing a sample containing an analyte (or suspected of containing an analyte) with a "tracer,", i.e., a labelled compound similar to the analyte but capable of producing a fluorescence polarization response to plane polarized light. The anlyte is generally a low molecular weight compound. Antibody specific to the analyte and the tracer is also included in the mixture. The tracer and the analyte compete for a limited number of receptor binding sites on the antibody. The amount of tracer that will bind is inversely related to the concentration of analyte in the sample, because the analyte and tracer each bind to the antibody in proportion to their respective concentrations.

The fluorescence polarization response of the solution to plane polarized light will give a quantitative indication of relative amount of free and bound tracer, because of the discrepancy in molecular size between the former and the latter. The free tracer (i.e., the tracer in solution when not complexed to the antibody) is generally a relatively small molecule compared to the tracer-antibody complex, and will tend to exhibit a shorter rotational relaxation time, such that the incident plane polarized light becomes depolarized. In contrast, plane polarized light interacting with bound tracer will tend to remain highly polarized because the large antibody-tracer rotates very little between the time that light is absorbed and emitted.

0197425

Difficulties are presented, however, when such fluorescence polarization techniques are applied to analytes of high molecular weight. Since the tracer must generally resemble the analyte in order to effectively compete for antibody receptor sites, the tracer itself, in such instances, will be relatively large and will tend to retain the polarization of plane polarized light. Accordingly, when this large tracer molecule is bound to the antibody, there will generally not be an appreciable difference in the fluorescence polarization response when compared with that response given by the free tracer, so in such cases it may be necessary to consider alterative assay techniques.

Nephelometric techniques provide a means to measure the light scattered from a solution containing large molecules or suspended particles. In accordance with these techniques, incident light is passed through a solution, a portion of the incident light is scattered, and then the amount of scattered light is measured. These techniques have applications, for example, when immunprecipitation assays are conducted. In such assays, antibodies are raised to the analyte, often forming large three-dimentional lattices. These lattices produce an increase in the light scattering properties of the solution.

An automated assay system with capabilities for both fluorescence polarization and nephelometric analysis would be economical, highly versatile and extremely useful in the diagnostics field. However, while typical examples of automated fluorescence polarization apparatus operate at different light excitation and emission wavelengths, nephelometric analyses require the measurement of scattered light, i.e., where the excitation and emission wavelengths are substantially the same. Accordingly, there exists a need for a method and apparatus to perform nephelometric assays using readily available fluorescence polarization apparatus.

## SUMMARY AND OBJECTS OF THE INVENTION

The present invention comprises an improved fluorescence polarization apparatus, and a method for adapting fluorescence polarization apparatus to perform nephelometric assays. The improved fluorescence polarization apparatus of the present invention comprises means for modifying the apparatus such that nephelometric assays can be performed therewith. The method of the present invention comprises providing means for modifying fluorescence polarization apparatus such that nephelometric assays can be performed with the apparatus.

Accordingly, primary object of the present invention is to provide a modification of a fluorescence polarization analyzer to permit nephelometric (light scattering) measurements to be made therewith.

Another important object of the invention is to provide this modification without impairing the function of the analyzer to perform fluorescence polarization immunoassays.

A further object of the invention is to make this modification with minimal changes to the hardware of the existing fluorescence polarization analyzer.

Still another object of the invention is to provide this modification to an automated fluorescence polarization analyzer such that such an analyzer will be able to perform automated nephelometric (light scattering assays).

Yet another object of the invention is to permit light scattering measurements to be taken at a relatively low wavelength and small scattering angle (where the scattering angle is defined as the angle between the transmission direction of the incident light and the detected beam).

Still another object of the present invention is to provide an instrument that can be used for conducting fluorescence polarization as well as nephelometric assays, with little or no requirement for the user to physically adjust the instrument to perform the latter assays.

Further objects and attendant advantages of the invention will be best understood by a study of the following detailed description of the preferred embodiments together with the drawings.

BRIEF DESCRIPTION OF THE DRAWINGS

FIGURE 1 is a perspective view of a prior art fluorescence polarization analyzer without the improvements provided by a preferred embodiment of the present invention and showing the prior art carousel portion mounted therein.

FIGURE 2 is a side elevation view of the prior art carousel of FIG. 1.

FIGURE 3 is a bottom view of the carousel of FIG. 2.

FIGURE 4 is a schematic plan view of the carousel of FIG. 2 together with the associated fluorescence polarization optical system of the analyzer of FIG. 1.

FIGURE 5 is an exploded perspective view of another carousel which can be used in place of the prior art carousel of FIG. 2 in an analyzer similar to that of FIG. 1 but which has been improved in accordance with a preferred embodiment of the present invention.

FIGURE 6 is a side elevation view of the carousel of FIG. 5.

FIGURE 7 is a bottom view of the carousel of FIG. 5.

FIGURE 8 is a schematic plan view similar to FIG. 4, but showing instead the carousel of FIG. 5.

FIGURE 9 is a side elevation view of a carousel useful in the analyzer of FIG. 1, and which has been improved in accordance with a further preferred embodiment of the present invention.

FIGURE 10 is a graph showing the transmission characteristics of excitation and emission bandpass filters in the analyzer of FIG. 2.

FIGURES 11 through 14 show calibration and assay results obtained using the improved apparatus of the present invention.

DETAILED DESCRIPTION OF THE INVENTION

The present invention is directed to fluorescence polarization apparatus that is modified such that nephelometric assays can also be performed with the apparatus. Although the preferred embodiments described herein are specifically directed to adaptation of an automated analyzer, particularly the ABBOTT TDx Fluorescence Polarization Analyzer, for this purpose, it is to be appreciated that the invention is not limited in its applicability to that particular analyzer, but can be applied to any conventional manual or automated fluorescence polarization analyzer which one skilled in the art may desire to adapt for the performance of nephelometric assays.

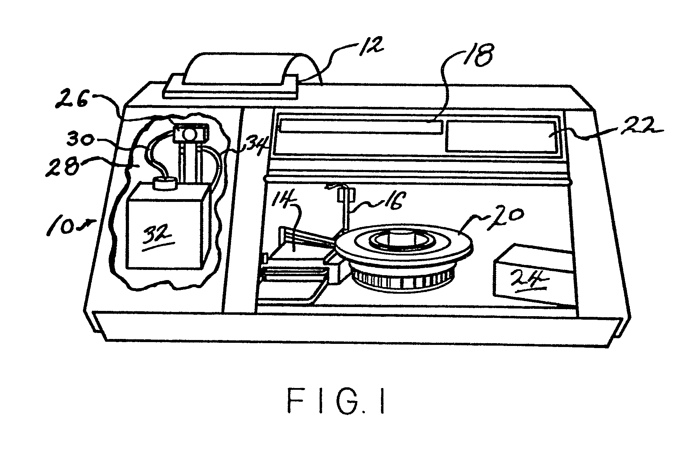

Turning now to FIGS. 1 through 4 of the drawings, the pre-existing Abbott TDx Fluorescence Polarization Analyzer is represented generally at 10, and the components thereof which are pertinent to the description of the preferred embodiments of this invention are also shown. Major features of the analyzer 10 comprise an output printer 12; reagent container 14; a pipetter boom assembly 16; an output display 18; a carousel 20; a control panel 22; a lamp housing 24, a diluent and sample value block 26; diluent and sample syringes 28; inlet tubing 30; dilution buffer container 32 and interconnecting tubing 34.  The TDx System Operational Manual (April 1984 Edition), is available from the Diagnostics Divison of Abbott Laboratories and contains a more detailed description of the TDx  Analyzer and its operation before the addition thereto of the improvements provded by the present invention.

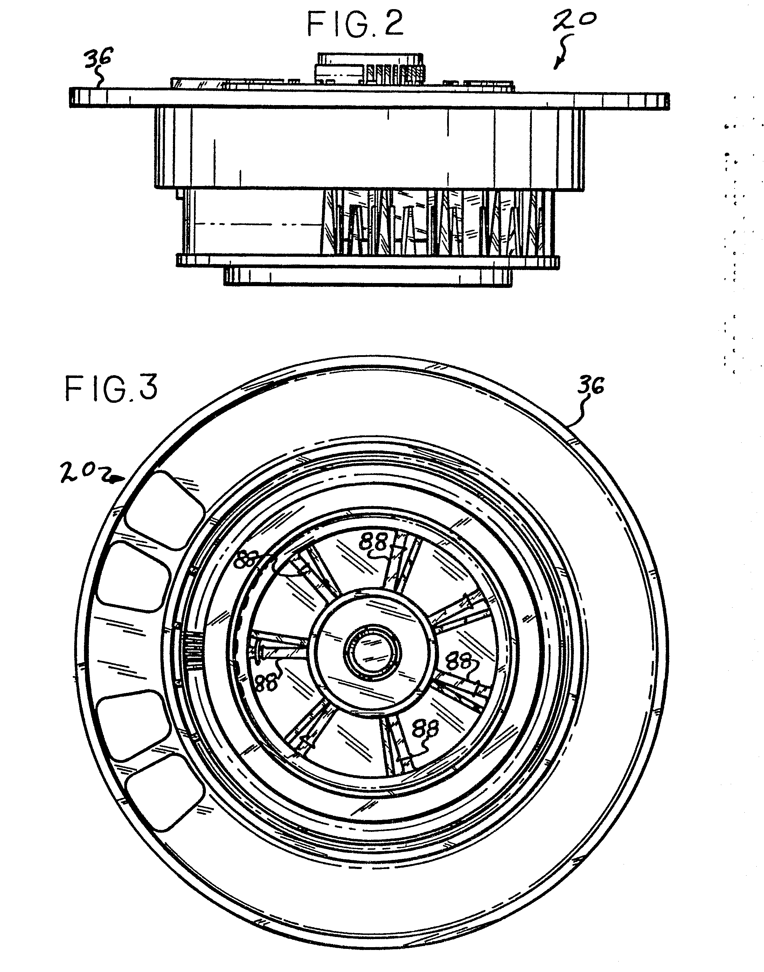

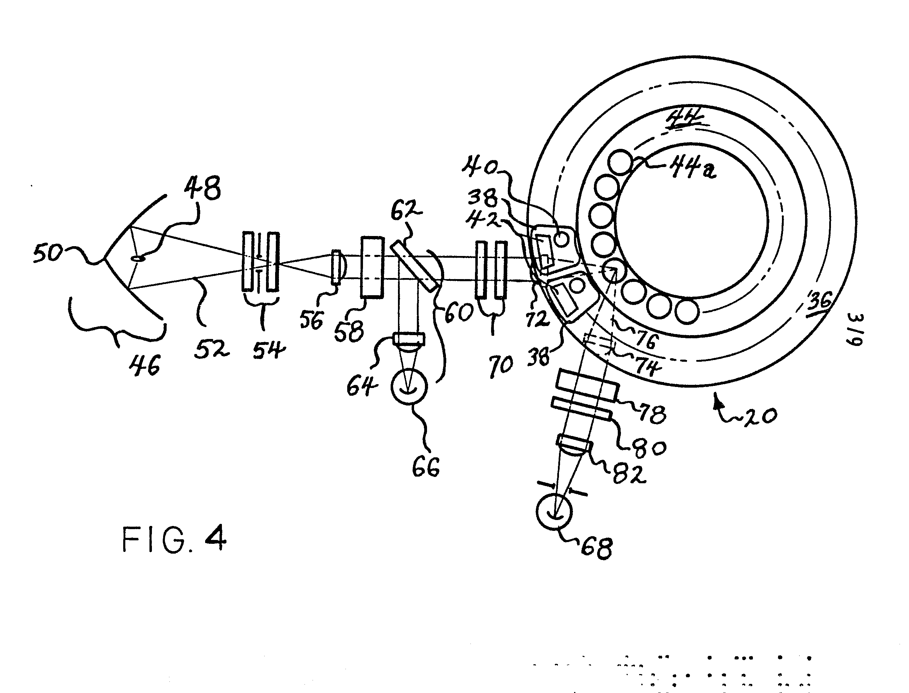

The improvements of the present invention, such as applied to the analyzer 10, relate particularly to physical modification, i.e., "retrofitting", of the carousel 20.  The carousel 20 is shown in some detail in FIGS. 2 through 4.  In addition, the principles of the invention also apply advantageously to alterations to the existing excitation or emission optics of the analyzer 10, shown in FIG. 4.  For the purposes of the present disclosure, the pre-existing excitation optics of an analyzer such as the one shown at 10 are to be considered as "modified" or "altered" even when they are bypassed in favor of another excitation source.

Although not an aspect of the present invention, general description of the use and operation of a TDx Analyzer which has not been modified in accordance with the invention will now be briefly set forth.  Referring now to FIGS. 1 through 4 of the drawings, prior to the performance of a fully automated assay on the unmodified TDx  Analyzer, an outer tray 36 of the carousel 20 is loaded with sample cartridges 38 which contain sample wells 40  and predilution wells 42, and an inner housing thereof 44 is loaded with reaction cuvettes 44a in which the assay is carried out and read by the analyzer. As is well known, the loaded carousel 20 is then placed in an analysis chamber in an analyzer such as shown at 10 in FIG. 1, which is provided with a drive mechanism, such as a rack and pinion gear (not shown) for rotating the carousel 20 with respect thereto. The sample and the reagents are then pipetted by the pipetter boom assembly 16 into the reaction cuvettes 44a and the fluorescence polarization analysis is carried out.

The fluorescence polarization analysis, for example using the analyzer 10 of FIG. 1, is generally conducted in accordance with the excitation and emission optics shown in FIG. 4. A lamp 46, comprising a tungsten filament 48 and a parabolic reflector 50, emits a beam of white light 52. The light beam 52 passes through an infrared absorbing lens 54, followed by an excitation collecting lens 56 and an excitation bandpass filter 58 centered, in a typical case, on a wavelength of about 485 nanometers. A reference assembly 60, comprising a reflector 62, a reference focusing lens 64 and a reference detector 66, diverts a portion of the beam 52 for monitoring the intensity of the beam 52 as the latter is emitted from the lamp 46. (In order to make a correction for variations in lamp intensity, the measurements are taken as a ratio of the signal from a photmultiplier detector 68 to the signal from the reference detector 66.) The remaining beam 52 passes to a liquid crystal polarizer 70 that alternately horizontally and vertically polarizes the light beam 52. Finally, an excitation condensing lens 72 focuses the light beam 52 on the center of one of the reaction cuvettes 44a, which contains antiserum, tracer and sample.

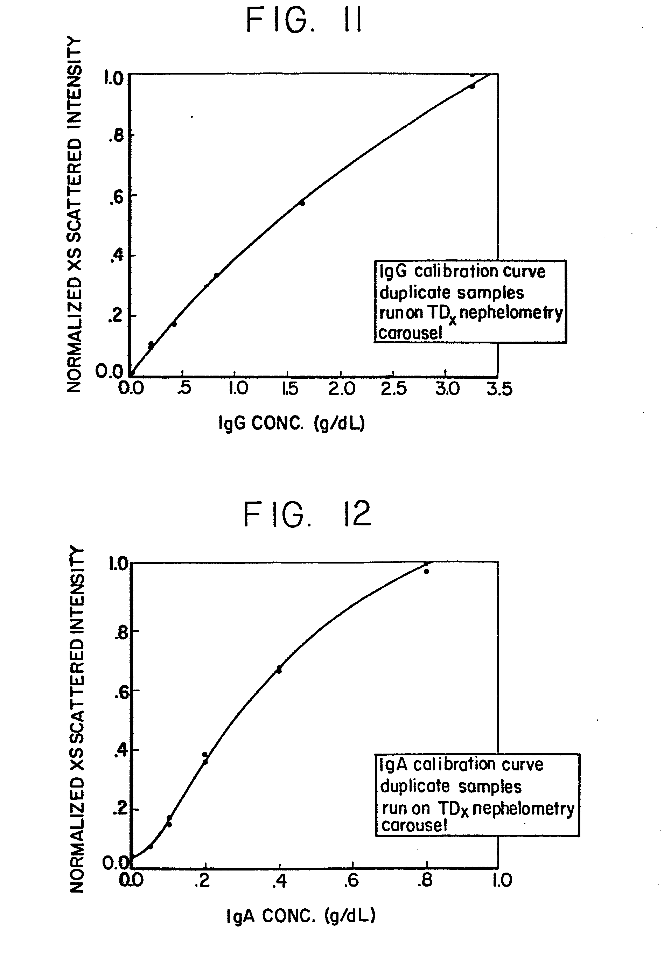

The 485 nanometer light beam 52 excites the fluorescein containing compounds (i.e., bound and free tracer) contained in the reaction cuvette 44a, and these compounds respond by emitting light in a wavelength band ordinarily centered at approximately 525 nanometers. An emission collecting lens 74 captures the cone of emitted light 76. This light 76 then passes through an emission bandpass filter 78. The emission bandpass filter 78 permits light to pass through at about 525 nanometers, with a sharp cut-off on the low wavelength side to substantially prevent the passage of scattered light, e.g., having a wavelength of bout 485 nanometers, and with a broader cut-off on the high wavelength side. (FIG. 12 shows the transmission characteristics of the excitation bandpass filter 58 and the emission bandpass filter 78.) The light 76 then passes through a vertical polarizer 80, and an emission condensing lens 82 condenses the light 76, causing it to pass to the photomultiplier detector 68, which detects the resultant signal and transmits current signals to associated, largely conventional electronics which interprets those signals as indicative of the presence and/or amount of an analyte in the sample.

As has been noted above, an important objective of the present invention is to modify the above-described automated assay system (and other automated fluorescence polarization assay systems) so that nephelometric assays can be conducted, without substantial alterations to the hardware of the system.

Three preferred embodiments of the invention will now be described in accordance with this objective. Two of the presently preferred embodiments completely bypass the above-described excitation optics, and instead involve the use of light emitting diodes. The third preferred embodiment retains the above-described excitation optics, but uses a light conversion filter between the reaction cuvettes 44a and

0197425

the emission bandpass filter 78. The purpose of each of the modifications described herein is to compensate for the fact that prior art fluorescence polarization analyzers, such as the TDx Fluorescence Polarization Analyzer herein descrbied, are typically designed to operate at an excitation wavelength of about 485 nanometers and an emission wavelength of about 525 nanometers, while in contrast, incident light in nephelometry analyses is merely scattered such that the incident light and the scattered light have substantially the same wavelength. Accordingly, the scattered light in these preferred embodiments is of a wavelength compatible with -- or is converted such that it becomes compatible with -- the emission band pass filter 78.

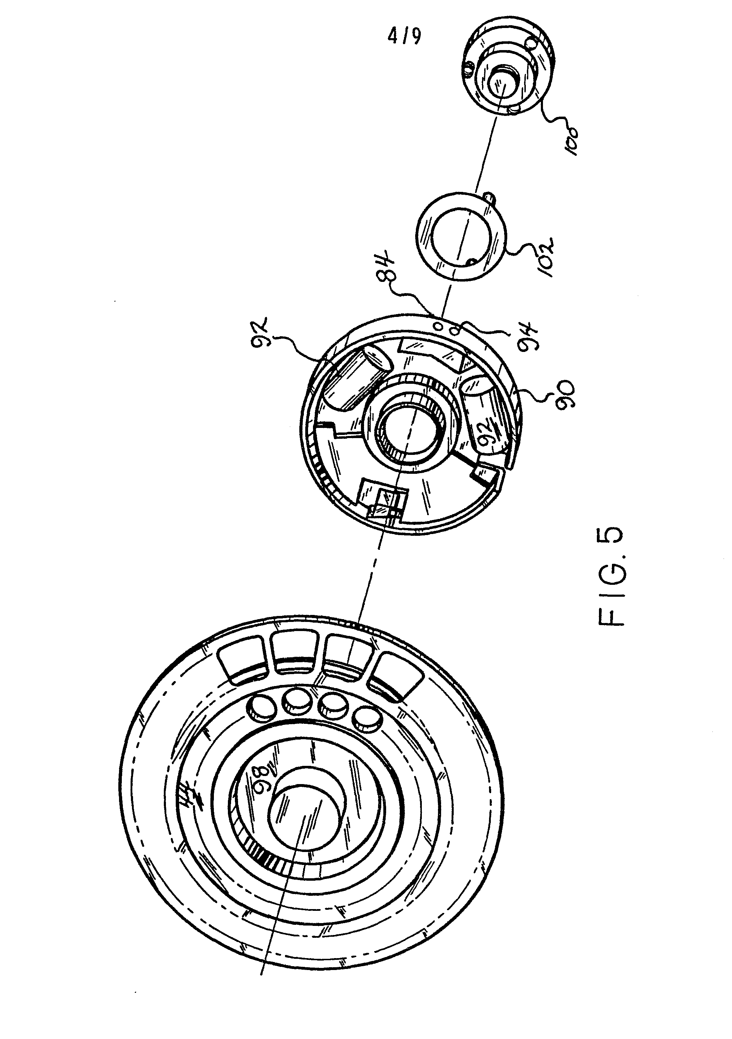

FIGS. 5. through 8 illustrate a first presently preferred embodiment of the present invention. In accordance with this embodiment, a single light emitting diode 84 is used instead of the above-described excitation optics. Typically, a preferred light emitting diode of this type will emit a beam of light having a wavelength of between 555 to 560 nanometers or more, and can be purchased from Hewlett Packard as part number HLMP 3519.

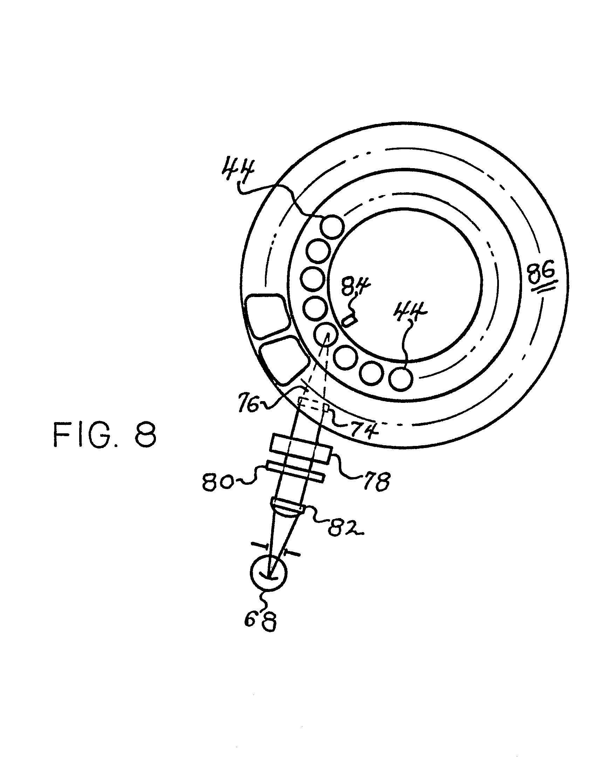

According to this first embodiment and referring now to FIG. 8, the aforedescribed carousel 10 is modified: (1) to include the light emitting diode 84 behind a reaction cuvette 44a, relative to an outer ring 86 of the carousel 20; and, (2) to include means for moving the light emitting diode 84 relative to each of the reaction cuvettes 44a (or moving the reaction cuvettes 44a relative to the light emitting diode 84). Accordingly, when the carousel 20 is in operation to perform nephelometric measurements of substances in samples in the reaction cuvettes 44a, the light emitting diode 84 can be positioned, in turn, as desired so that it is adjacent each reaction cuvette 44a to be analyzed. In this embodiment, the light scattering ability of the mixture of reagents and sample in the reaction cuvettes 44a is measured most desirably at a scattering angle of 37.5 desgrees and a wavelength of 565 nanometers by the existing emission optics decribed in connection with FIG. 4.

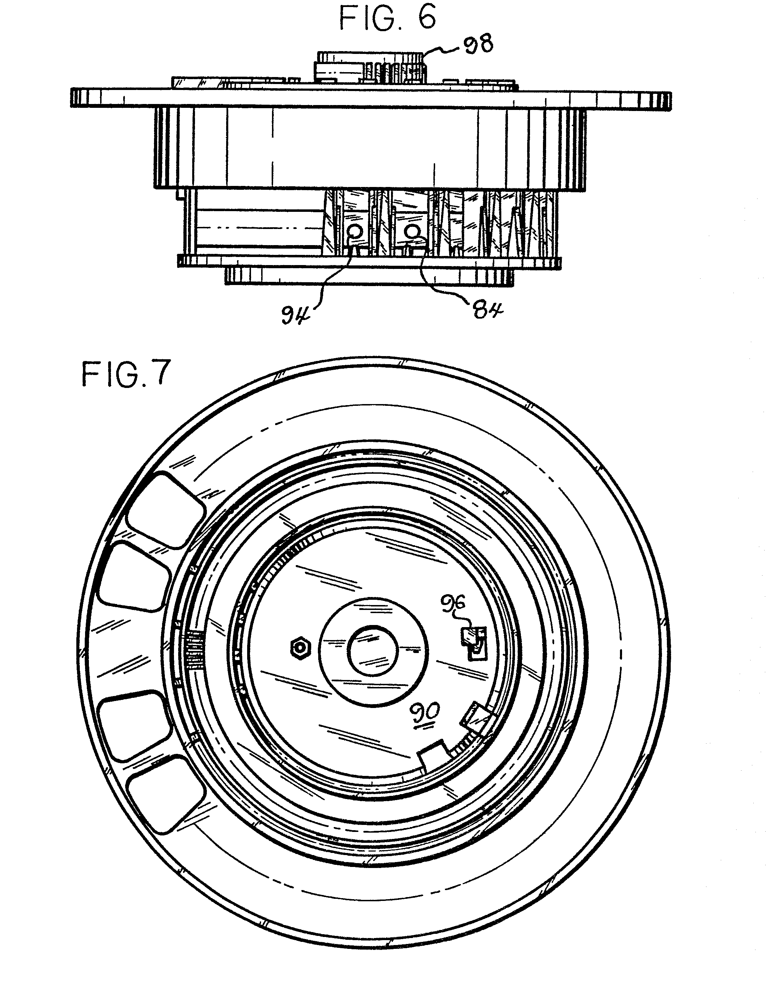

In modification of the carousel 20 in accordance with the invention, the light emitting diode 84 can be inserted into the carousel 20 by: removing support ribbing 88 (as shown in FIG.3) from the carousel 20; providing openings behind the reaction cuvettes 44a in the inner housing 44; and providing a base 90 (as seen in FIGS. 5 and 7) for supporting the light emitting diode 84 behind the reaction cuvettes 44a. These modifications to the carousel 20 can be machined from, e.g., metal or plastic, or preferably, can be injection molded from ABS (such as Cycolac GSM, obtainable from General Electric).

In a presently preferred variation of the first embodiment, the light emitting diode 84 is powered by two disposable lithium batteries 92 (manufactured by Panasonic as part number BR-2/3A) (FIG 5). These batteries 92 are mounted and connected in series in the base 90, and form part of a largely conventional constant voltage control circuit.

In this circuit, a constant voltage controller is employed in a manner well known to those skilled in the art to maintain the voltage of the light emitting diode 84 at a constant level throughout the life of the batteries 92. Preferably, a test light emitting diode 94, manufactured by Dialight as part number 521-9177, is also provided, if desired, for the purpose of alerting the user when the bateries 92 should be replaced. The requirements for and contruction of the constant voltage control circuit are of a largely conventional nature and will be well understood by one of ordinary skill in the art.  Alternatively, the voltage control circuit can   • simply be omitted and the light emitting diode 84 can merely be powered, for example, by a rechargeable nickel-cadmium cell built into the carousel 20; the carousel 20 can, optionally, be placed on a recharging stand when not in use, in such a manner as to recharge the battery.

Means for moving the light emitting diode 84 relative to the reaction cuvettes 44a can be provided, in an especially preferred embodiment, by rotatably mounting the base 90 in the carousel 20 and holding the base 90 in a stationary position while the cuvettes 44a are rotated in their housing 44 by a rack and pinion gear drive mechanism (not shown).  A switch 96 (FIG. 7) on the base 90 engages and is activated by a pin (not shown) when the carousel 20 is mounted in the analysis chamber of an analyzer such as that depicted in FIG. 1, and the base 90 is accordingly prevented from rotating with the outer ring 86 of the carousel 20 and the inner housing 44 of the carousel 20.  As the switch 96 is engaged by the pin, the light emitting diode 84 is switched on since the switch 96 is connected with circuitry controlling the on or off condition of light emitting diode 84.  Alternative means can be provided for turning the light emitting diode on or off, e.g. a photodiode or a phototransistor (not shown) communicating with the instrument via a bar code reading device, such as the existing TDx  bar code reader (not shown).

The base 90 preferably can be rotatably mounted in the carousel 20 as shown in FIG. 5, by providing the carousel 20 with a threaded central knob 98, a complementing threaded fastener 100, and a spring support 102. The base 90, knob 98, fastener 100 and support 102 are assembled by screwing the fastener 100 to the knob 98, with the support 102 and the base 90 positioned in between the knob 98 and the fastener 100.

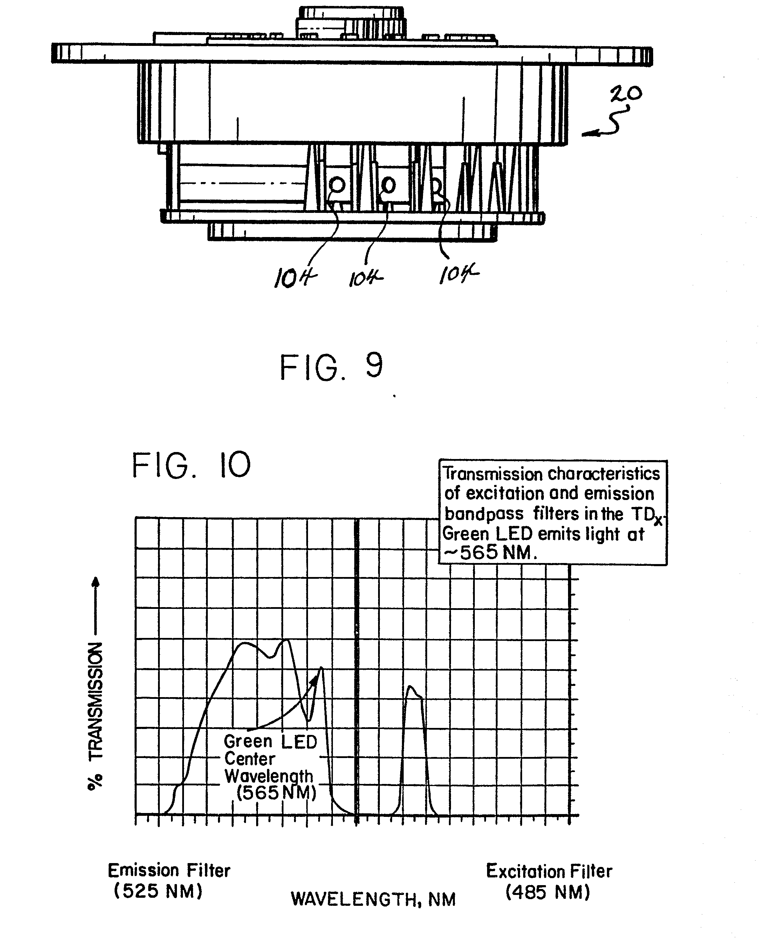

FIG. 9 illustrates a second presently preferred embodiment of this invention. In accordance with the second embodiment, the modified carousel 20 is of substantially the same construction as the modified carousel 20 of FIGS. 6-8, except that a plurality of light emitting diodes, indicated at 104, are provided, one behind each reaction cuvette, rather than a single diode as in the first embodiment previously described. The diodes 104 are substantially the same as the diode 84, and are preferably connected through a load resistor to a power supply, such as a disposable or rechargeable battery. Alternatively, a nickel-cadmium cell as well as photodiodes and/or phototransistors can be used in the manner described in connection with the first preferred embodiment, _infra_. In accordance with this embodiment, it is not necessary to modify the carousel 20 such that one portion can be rotated relative to another, since a light emitting diode 104 is provided for each reaction cuvette.

Fully automated immunoprecipitation assays for Immunoglobins A, G, and M, and for C-reactive protein, have been developed for use with either of the two preferred embodiments of the invention previously described. These assays employ endpoint detection with sample blank correction, require no sample pretreatment, and feature automatic antigen-excess checking for the immunoglobins. Good correlations have been observed between the TDx immunonepheloetric methods and either radial immunodiffusion or the Beckman ICS®assays. Relative standard deviations have been found to be in the range of 3 to 6 percent within-run and 7 to 9 percent between-run. Results have been obtained in about 14 minutes, and the calibration curves may be stored for at least 2 weeks.

In the first and second embodiments described above, the analyzer is calibrated with a turbidity calibrator placed in each reaction cuvette 44a of the modified carousel 20 of the invention. Such a calibrator can comprise, for example, a suspension of polystyrene latex microspheres. A calibration factor for any position (j) is obtained by making intensity readings of the turbidty calibrator and then taking the ratio of an excess intensity reading at cuvette position (j) to a reading at position (1) (which is used here as a reference position):

$$C_j = \frac{I^{cal}(j) - I^{bknd}(j)}{I^{cal}(1) - I^{bknd}(1)} = \frac{I^{cal}_{xs(j)}}{I^{cal}_{xs(1)}}$$

where $U^{cal}$ refers to the intensity reading at position (j) with the calibrator in the reaction cuvette, and $I^{bknd}$ refers to an intensity reading at position (j) with buffer only in the reaction cuvette.

During any run, the turbidity calibrator is placed in position 1. The scattering of a sample at position (j) is expressed in units of calibrator excess scattered intensity and corrected for positional optical variations as follows:

$$I_{corrected}^{sample} = \frac{1}{C_{(j)}} \frac{I^{sample}(j) - I^{bknd}(j)}{I^{cal}(1) - I^{bknd}(1)} = \frac{1}{C_{(j)}} \frac{I_{xs(j)}^{sample}}{I_{xs(1)}^{cal}}$$

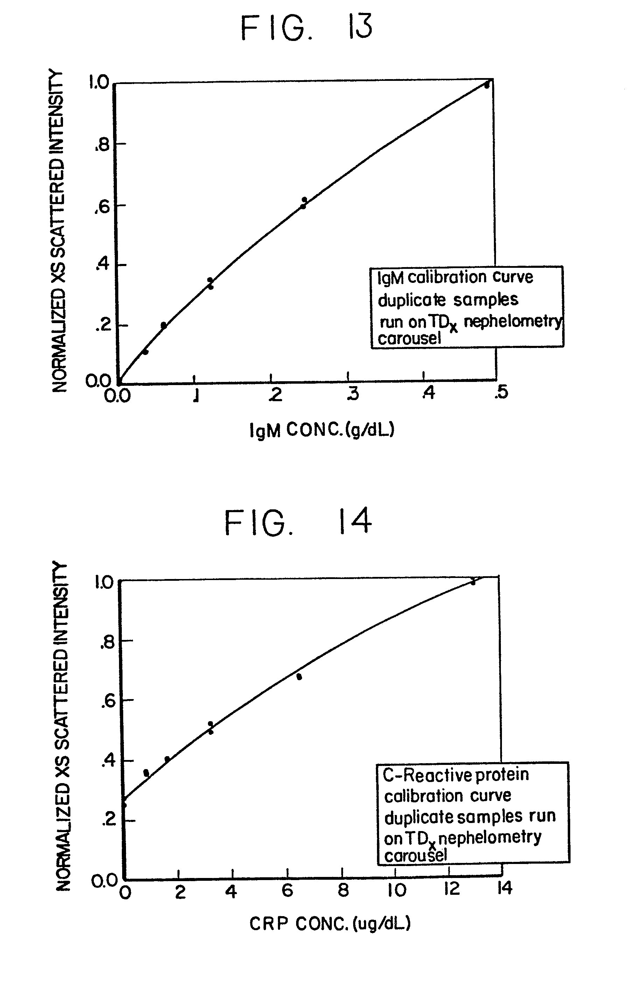

FIGS. 11 through 14 show calibration curves for Immunoglobulins A, G, and M, and for C-Reactive Protein, all obtained with a modified carousel made in accordance with the first prefereed embodiment of the present invention, described infra. (These plots were normalized to the highest level of analyte calibrator in each case, rather than to the turbidity calibrator in position (1) as shown in the expression above.)

In a third presently preferred embodiment of the invention, the existing excitation optics, described in connection with FIG. 4, are employed such that the scattering angle is 105°. However, without modification to the emission optics, the 525 nanometer emission bandpass filter 78 blocks about 99% of the scattered light from the excitation optics, since the excitation beam 52 has a wavelength centered at about 485 nanometers and is merely scattered at the same wavelength in the nephelometry analysis. (See FIG. 10, showing the transmission characteristics of the excitation and emission bandpass filters). Ordinarily, this blockage would result in a low signal throughput to the photomultiplier detector 68. Accordingly, the signal and sensitivity are improved, in accordance with this third embodiment of the invention, by converting the 485 nanometer light 76 on the emission side to 525 nanometers. This can be accomplished by use of a fluorescence conversion filter interposed in the light path between the reaction cuvette and the photomultiplier detector 68.

Any substance which absorbs 485 nanometer light and emits 525 nanometer light (or light of a greater wavelength, compatible with the transmission characteristics of the emission bypass filter 78 as seen in FIG. 10) can be used as the conversion filter, such as a fluorescein filter. The efficiency of the light conversion will depend upon factors such as: the concentration of the fluorescent substance if excitation and emission spectra overlap; the distance of the filter from the photomultiplier detector 68 (in view of the fact that the re-emitted light is scattered); the quantum efficiency of the fluorescent substance; the path length through the filter; and the addition of a focusing lens between the conversion filter and the emission bandpass filter 78. FIG. 9 shows the results obtained with and without a fluorescein light conversion filter, where the x-axis represents the strength of the signal and the y-axis represents the quantity of precipiated immunoglobulin G in the reaction cuvette.

By way of example, a conversion filter can be made from films using fluorescein (as a dye) in polyvinylalcohol with glycerol as a plasticizer. Experimentally, a titration of fluorescein concentration revealed that 312.5 micrograms per milliliter was the optimum concentration of fluorescein for polyvinylalcohol films, since lower concentrations did not generate sufficient signal and higher concentrations self-quenched. Alternatively, cellulose nitrate films can be made containing Rhodamine 110 and Coumarin 6 dyes; Coumarin 6 can also be used in methyl methacrylate. Examples directed to making such films are given below.

It is to be understood that the foregoing detailed description and the following examples are to be considered as illustrative rather than limiting, since many variations within the scope of the invention will be apparent to one of ordinary skill in the art. Accordingly, it is intended that the appended claims, including all equivalents thereof, be taken solely to define the scope of the invention.

EXAMPLES

Example I:  Polyvinyl Alcohol Wavelength Conversion Filter

2% (weight/volume) of polyvinyl alcohol (2g P.V.A./100 ml $H_2O$) are added to water along with 0.8% (volume/volume) glycerol (0.8 ml glycerol/100 ml $H_2O$).  The resulting solution is heated gently to dissolve the polyvinyl alcohol and the glycerol.  The suspension is cooled and the desired concentration of fluorscent dye is added.  The solution is spread in a thin film and allowed to cool overnight at room temperature.

Example II:  Methyl Methacrylate Wavelength Conversion Filter

Fluorescent dye is dissolved to the desired concentration in alcohol (ethyl or methyl).  This dye solution is then mixed 50:50 (volume/volume) with the bleach component of HH722 casting resin kit (available from Polysciences Incorporated of Warrington, Pennsylvania).  Six milliliters of the resulting solution and 3 ml of catalyst from the casting resin kit are added to 100 ml of the casting resin.  The solution is poured ino a vessel and cured overnight at room temperature.

Examples III-VI: Serum Protein Assays on an Analyzer
Modified in Accordance with the Present Invention

Reference is made to Table 1, supra, for specific ragents and quantities. Under typical conditions on a TDx Analyzer, which was used to perform the following assays, the analyzer transfers aliquots of sample from sample cartridges to the reaction cuvettes along with 150 microliters (ul) of 20% polyethylene glycol (PEG) and enough TDx buffer to bring the total volume to 10 ml within each cuvette. These solutions are incubated for approximately 3 minutes. The background scattered intensity from each reaction cuvette is then determined.

A second pipetting sequence transfers aliquots of sample along with specific antiserum, 20% PEG and sufficent TDx buffer to bring the total volume within each reaction cuvette to 1.5 ml. Again the solutions are incubated for approximately 3 minutes. Antigen-antibody complexes form which are capable of scattering the light produced by the LED source lamp(s) in the nephelometric carousel. The scattered light is detected as aforedescribed and a microcomputer within the analyzer converts signals from the microcomputer into concentration units by means of a standard curve and stored carousel calibration factors.

Finally, a developer antigen (a solution of the purified analyte being assayed) is added along with another 75 uL of 20% PEG and enough buffer to bring the final volume in each cuvette to 2.0 ml. Again the scattered light intensity is determined and then, based upon the antigen excess criteria with which it has been programmed, the analyzer will establish whether that signal is indicative of an antigen excess condition (which is a prerequisite for a valid assay). The following table summarizes reagents and quantities for each of the assays IgG, IgA, IgM and CRP (C-Reactive Protein).

TABLE 1.   REAGENTS AND QUANTITIES PER TEST

|  | Ex. III IgG | Ex. IV IgM | Ex. V IgA | Ex. VI CRP |
|---|---|---|---|---|
| **First Pipetting Sequence** | | | | |
| Sample Volume | 0.15 uL | 1.5 uL | 3.0 uL | 10 uL |
| 20% Polyethylene Glycol | 150 uL | 150 uL | 150 uL | 150 uL |
| TDx Buffer | 850 uL | 850 uL | 850 uL | 850 uL |

BACKGROUND READING

|  | | | | |
|---|---|---|---|---|
| **Second Pipetting Sequence** | | | | |
| Sample Volume | 0.075 uL | 0.75 uL | 1.5 uL | 5 uL |
| Antiserum | 50 uL | 50 uL | 50 uL | 50 uL |
| 20% Polyethylene Glycol | 75 uL | 75 uL | 75 uL | 75 uL |
| TDx Buffer | 25 uL | 25 uL | 25 uL | 25 uL |

SCATTERING INTENSITY READING

|  | | | | |
|---|---|---|---|---|
| **Third Pipetting Sequence** | | | | |
| Developer Antigen (Assay Specific) | 25 uL | 25 uL | 25 uL | 25 uL |
| 20% Polyethylene Glycol | 75 uL | 75 uL | 75 uL | 75 uL |
| TDx Buffer | 400 uL | 400 uL | 400 uL | 400 uL |

CLAIMS:

1. In fluorescence polarization apparatus, the improvement comprising means for modifying the apparatus such that nephelometric assays can be performed therewith.

2. The apparatus of Claim 1 wherein the fluorescence polarization apparatus comprises excitation optics and emission optics, and wherein the means for modifying the apparatus comprises a light emitting diode source lamp compatible with the emission optics and adapted to be used in place of the excitation optics when nephelometric assays are conducted.

3. The apparatus of Claim 1 wherein the fluorescence polarization apparatus comprises excitation optics and emission optics, and wherein said means for modifying the apparatus comprises a fluorescence conversion filter operative to convert light from the excitation optics to a wavelength compatible with the emission optics.

4. The apparatus of Claim 3 wherein the filter comprises fluorescein or a derivative thereof.

5. In fluorescence polarization apparatus comprising a set of excitation optics capable of producing an exciation beam of light having an excitation wavelength and a set of emission optics capable of producing an emitted beam of light having an emission wavelength that differs from the excitation wavelength, the improvement comprising: means for modifying at least one of said sets of emission and excitation optics such that nephelometric assays can be performed with said apparatus.

6. The apparatus of Claim 5 wherein said means comprises a light emitting diode source lamp having a wavelength compatible with the emission optics, as the excitation optics.

7. The apparatus of Claim 5 wherein said means comprises a fluorescence conversion filter operative to convert light from the excitation optics into a wavelength compatible with the emission optics.

8. The apparatus of Claim 7 wherein the filter comprises fluorescein or a derivative of fluorescein.

9. A method for modifying fluorescence polarization apparatus, comprising the step of providing means for modifying the apparatus such that nephelometric assays can be performed therewith.

10. The method of Claim 9 wherein the fluorescence polarization apparatus comprises excitation optics, a reaction vessel containing a mixture of ingredients, and emission optics, and wherein the step of providing means for modifying the apparatus comprises the steps of:

bypassing the excitation optics of the apparatus;

providing a light emitting diode source lamp;

passing light from the light emitting diode through the mixture in the reaction vessel;

causing the light from the mixture in the reaction vessel to scatter; and

collecting at least a portion of the scattered light in the emission optics of the apparatus.

1/9

FIG.1

# FIG. 2

36  20

# FIG. 3

202  36

88 88 88 88 88

FIG. 4

FIG.5

419

0197425

## FIG. 6

98

94    84

## FIG.7

96

90

FIG. 8

7/9

20

104  104  104

# FIG. 9

# FIG. 10

Transmission characteristics
of excitation and emission
bandpass filters in the TD$_x$.
Green LED emits light at
~565 NM.

% TRANSMISSION ⟶

Green LED
Center
Wavelength
(565 NM)

Emission Filter
(525 NM)

WAVELENGTH, NM

Excitation Filter
(485 NM)

## FIG. II

IgG calibration curve
duplicate samples
run on TD$_x$ nephelometry
carousel

IgG CONC. (g/dL)

## FIG. 12

IgA calibration curve
duplicate samples
run on TD$_x$ nephelometry
carousel

IgA CONC. (g/dL)

## FIG. 13

IgM calibration curve
duplicate samples
run on TD$_x$ nephelometry
carousel

## FIG. 14

C-Reactive protein
calibration curve
duplicate samples run
on TD$_x$ nephelometry
carousel